# EUROPÄISCHE PATENTANMELDUNG

(11) **EP 3 046 044 A1**
(43) Veröffentlichungstag der Anmeldung: **20.07.2016**
(21) Anmeldenummer: 15151136.7
(22) Anmeldetag: 14.01.2015
(51) Int. Cl.: G06F 21/62, H04L 29/06

(54) **System und Verfahren zur Anonymisierung personenbezogener Daten**

(71) Anmelder: Kohleick, Reinhard, 42109 Wuppertal (DE)
(72) Erfinder: Kohleick, Reinhard, 42109 Wuppertal (DE)
(74) Vertreter: Patent- und Rechtsanwälte Dr. Solf & Zapf

(57) **Zusammenfassung**

Die vorliegende Erfindung betrifft ein Verfahren zur Erfassung personenbezogener Daten, aufweisend das Erfassen der zu einem Ereignis von einer Person zugehörigen Daten in einer Datenquelle (3) und Trennung der Daten in Ereignisdaten (Eₙ) und in mindestens ein der Person zuordbares persönliches Merkmal (Iₙ), die Verschlüsselung der Ereignisdaten (Eₙ) in der Datenquelle (3) mittels Verschlüsselungsmitteln (V), die Kombination des persönlichen Merkmals (Iₙ, Iₙ') mit den zugeordneten verschlüsselten Ereignisdaten (V(Eₙ)) zu einem persönlichen Datenpaar (Iₙ, V(Eₙ); Iₙ', V(E)) und Übermittlung des persönlichen Datenpaares (Iₙ, V(Eₙ); Iₙ', V(E)) von der Datenquelle (3) an eine Anonymisierungseinheit (5), die Umwandlung des empfangenen persönlichen Merkmals (Iₙ, Iₙ') in einen anonymen Identifikator (An) unter Verwendung eines zufällig erzeugten Parameters durch Anonymisierungsmittel (13) der Anonymisierungseinheit (5), die Kombination des anonymen Identifikators (An) mit den empfangenen verschlüsselten Ereignisdaten (V(Eₙ)) zu einem anonymen Datenpaar (An, V(Eₙ)) in der Anonymisierungseinheit (5) und Übermittlung des anonymen Datenpaares (Aₙ, V(Eₙ)) von der Anonymisierungseinheit (5) an eine Auswerteeinheit (7), sowie die Entschlüsselung der empfangenen verschlüsselten Ereignisdaten (V(Eₙ)) in der Auswerteeinheit (7) mittels Entschlüsselungsmitteln (E) und Zuordnung der entschlüsselten Ereignisdaten (Eₙ) zu dem anonymen Identifikator (An) zur Verwendung der Daten in der Auswerteeinheit (7). Weiterhin betrifft die Erfindung einen Sensor, eine Anonymisierungseinheit sowie eine Auswerteeinheit zur Verwendung als Datenquelle bei einem solchen Verfahren und ein System zur Erfassung personenbezogener Daten gemäß einem solchen Verfahren.

## Beschreibung

Die Erfindung betrifft ein System und ein Verfahren zur Erfassung personenbezogener Daten. Zudem betrifft die Erfindung einen Sensor für eine Datenquelle, eine Anonymisierungseinheit und eine Auswerteeinheit zur Anwendung des Verfahrens als Teil des Systems.

Systeme und Verfahren zur Erfassung und Speicherung personenbezogener Daten werden in verschiedenen Bereichen, zum Beispiel zur Verkehrserfassung, im Gesundheitsbereich sowie auch zu Verkaufs- und Marketingzwecken an Verkaufsorten oder Werbeorten verwendet.

Bei bekannten Systemen oder Verfahren werden personenbezogene Ereignisse anhand einer Datenquelle erfasst. Die dabei erzeugten personenbezogenen Ereignisdaten sind insbesondere die Art, der Ort und die Zeit des personenbezogenen Ereignisses. Dazu wird ein der Person eindeutig zuordbares persönliches Merkmal zusammen mit dem Ereignis erfasst. Das persönliche Merkmal wird als eine eindeutige Zahlen- und/oder Zeichenkette erfasst. Die Erfassung kann entweder durch manuelle Eingabe in eine elektronische Datenbank oder automatisch durch geeignete Sensoren erfolgen. Die Sensoren sind vorzugsweise elektronische Geräte, die bestimmte, insbesondere elektronische Detektionsmittel aufweisen, um die gewünschten Ereignisdaten und persönlichen Merkmale zu erfassen und zur Weiterverarbeitung in elektronisch verwendbare Daten wie zum Beispiel Zeichenketten zu konvertieren. In der Regel werden die Daten mehrerer Datenquellen von einer Auswerteeinheit gesammelt, die Auswertungsmittel zur Analyse der Daten aufweist. Die Auswerteeinheit kann insbesondere als ein Computer ausgebildet sein. Mittels des persönlichen Merkmals können Ereignisse einer bestimmten Person, die von einer oder verschiedenen unabhängigen Datenquellen erfasst werden, sowohl in geographischer als auch in zeitlicher Abfolge der entsprechenden Person zugeordnet werden. Damit kann zum Beispiel in der Auswerteeinheit das Verhalten einer bestimmten Person oder bestimmter Gruppen von Personen in den Erfassungsbereichen der Sensoren über eine gewisse Zeit bestimmt und zu statistischen Zwecken analysiert werden.

So können zum Beispiel mittels eines Sensors einer Datenquelle anhand der MAC-Adresse eines WLAN-Interfaces eines Mobiltelefons die Besuche einer Person in Ladengeschäften eines Einkaufszentrums erfasst und aufgezeichnet werden. Oder durch die Aufzeichnung und Erkennung von Kfz-Kennzeichen an Tankstellen mittels Sensoren mit Videokameras und Bilderkennungssystemen können Besuche von Personen an Tankstellen erfasst werden. Dies ermöglicht zum Beispiel festzustellen, wie häufig eine Person ein Ladengeschäft oder eine Tankstelle besuchte, und welche Ladengeschäfte oder Tankstellen vorher besucht wurden. In Arztpraxen oder Krankenhäusern können zum Beispiel mittels Versicherungskarten die Namen oder die Versicherungsnummern von Personen in einer Datenbank einer Datenquelle erfasst und bestimmten Krankheitsereignissen zugeordnet werden. Damit können zum Beispiel diagnostizierte Infektionen bestimmten Krankheitsvorgeschichten statistisch zugeordnet werden.

Bisherige Systeme haben insbesondere den Nachteil, dass die von den Sensoren erfassten persönlichen Merkmale zusammen mit den erfassten Ereignissen an die Auswerteeinheit übermittelt und zum Zweck der statistischen Auswertung dort gespeichert werden. Dadurch hat der Besitzer der Auswerteeinheit die Möglichkeit, die Ereignisse direkt den persönlichen Merkmalen zuzuordnen, und es wird somit eine direkte Rückverfolgbarkeit der Person ermöglicht. So kann zum Beispiel durch Vorlage des Telefons beziehungsweise der MAC-Adresse von dem Besitzer der Auswerteeinheit, wie zum Beispiel dem Ladengeschäft, der Tankstelle oder dem Einkaufszentrum, festgestellt werden, wo und wann dieses Telefon, und damit die dem Telefon zugeordnete Person, bereits vom Ladengeschäft erfasst wurde. Die Speicherung und/oder Weitergabe von zuordbaren persönlichen Merkmalen zusammen mit zugeordneten Ereignisdaten kann jedoch zum Beispiel aus rechtlichen Gründen unerwünscht sein.

Der Erfindung liegt die Aufgabe zugrunde, ein System zur Erfassung von personenbezogenen Daten zur Verfügung zu stellen, bei dem die Rückverfolgbarkeit auf die reale Person beziehungsweise auf die erfassten Daten dieser Person anhand der gespeicherten Daten verhindert wird, wobei die erwünschten statistischen Auswertungen weiterhin möglich sind.

Die Aufgabe wird durch ein Verfahren zur Erfassung personenbezogener Daten gemäß Anspruch 1, einem Sensor gemäß Anspruch 7, einer Anonymisierungseinheit gemäß Anspruch 11, einer Auswerteeinheit gemäß Anspruch 12 und einem System zur Erfassung personenbezogener Daten gemäß Anspruch 13 gelöst.

Erfindungsgemäß umfasst das Verfahren zunächst ein Erfassen der zu einem Ereignis von einer Person zugehörigen Daten in einer Datenquelle und Trennung der Daten in Ereignisdaten und in mindestens ein der Person zuordbares persönliches Merkmal. Anschließend erfolgt die Verschlüsselung der Ereignisdaten in der Datenquelle mittels Verschlüsselungsmitteln. Darauf folgend wird das persönliche Merkmal mit den zugeordneten verschlüsselten Ereignisdaten zu einem persönlichen Datenpaar kombiniert und das persönliche Datenpaar von der Datenquelle an eine Anonymisierungseinheit übermittelt. Die Verschlüsselung der Ereignisdaten verhindert den Zugriff auf die Ereignisdaten durch unberechtigte Personen. Bei einem Zugriff auf das persönliche Datenpaar während der Kommunikation zwischen Datenquelle und Anonymisierungseinheit durch Dritte kann lediglich festgestellt werden, dass Daten für eine bestimmte Person vorhanden sind, die eigentlichen Daten können jedoch nicht eingesehen werden. Vorteilhafterweise werden die persönlichen Merkmale und die zugeordneten Ereignisdaten nach der Übermittlung in der Datenquelle gelöscht, so dass der Besitzer der Datenquelle keinen Zugriff auf diese Daten hat.

Die Anonymisierungseinheit wandelt mittels Anonymisierungsmitteln das empfangene persönliche Merkmal in einen anonymen Identifikator unter Verwendung eines zufällig erzeugten Parameters um. Zudem kombiniert die Anonymisierungseinheit den anonymen Identifikator mit den empfangenen verschlüsselten Ereignisdaten zu einem anonymen Datenpaar und übermittelt das anonyme Datenpaar an eine Auswerteeinheit. Der Besitzer der Anonymisierungseinheit kann lediglich feststellen, dass Daten für eine bestimmte Person übermittelt wurden, die eigentlichen Ereignisdaten können jedoch nicht eingesehen werden, da er nicht den privaten Schlüssel für die verschlüsselten Ereignisdaten besitzt. Vorteilhafterweise werden die verschlüsselten Ereignisdaten nach der Übermittlung an die Auswerteeinheit in der Anonymisierungseinheit gelöscht. Bei einem Zugriff auf das anonyme Datenpaar während der Kommunikation zwischen Anonymisierungseinheit und Auswerteeinheit durch Dritte kann weder die Person zugeordnet, noch können die Ereignisdaten eingesehen werden.

Die Auswerteeinheit entschlüsselt die empfangenen verschlüsselten Ereignisdaten mittels Entschlüsselungsmitteln und ordnet die entschlüsselten Ereignisdaten dem anonymen Identifikator zur Verwendung der Daten in der Auswerteeinheit zu. Der Besitzer der Auswerteeinheit hat keinen Zugriff mehr auf die persönlichen Merkmale. Insofern können die entschlüsselten Ereignisdaten keiner konkreten Person zugeordnet werden. Durch die Verwendung des anonymen Identifikators, der insbesondere weiterhin ausreichend eindeutig ist, können jedoch die Ereignisdaten anonymen Personen für eine statistische Auswertung zugeordnet werden.

Somit hat ein derartiges erfindungsgemäßes Verfahren den Vorteil, dass weder der Besitzer der Anonymisierungseinheit, noch der Besitzer der Auswerteeinheit, noch Dritte eine Möglichkeit haben, auf die eigentlichen personenbezogenen Daten und die Person zurückzuschließen.

In einer vorteilhaften Ausführungsform der Erfindung vergleicht die Anonymisierungseinheit mittels Anonymisierungsmitteln das empfangene persönliche Merkmal mit vorher bereits in Speichermitteln der Anonymisierungseinheit gespeicherten persönlichen Merkmalen, und falls das empfangene persönliche Merkmal keinem der in den Speichermitteln gespeicherten persönlichen Merkmalen entspricht, wandelt die Anonymisierungseinheit den anonymen Identifikator basierend auf einer One-Time-Pad Verschlüsselung des empfangenen persönlichen Merkmals mittels des zufällig erzeugten Parameters als einmalig verwendeter Schlüssel um und speichert den neuen anonymen Identifikator zusammen mit dem zugehörigen persönlichen Merkmal in den Speichermitteln der Anonymisierungseinheit, oder falls das persönliche Merkmal bereits in den Speichermitteln vorhanden ist, liest die Anonymisierungseinheit den dem empfangenen persönlichen Merkmal zugehörigen anonymen Identifikator aus den Speichermitteln aus. Durch die Verwendung einer Speichereinheit kann zudem eine mögliche mehrfache Vergabe der statistisch verteilten anonymen Identifikatoren für verschiedene persönliche Merkmale ausgeschlossen werden.

Die Verwendung einer One-Time-Pad Verschlüsselung mit einem geeigneten zufällig erzeugten Parameter als Teil der Anonymisierungsmittel der Anonymisierungseinheit ermöglicht eine mathematisch nachweisbar sichere Verschlüsselung und damit einen unmöglichen Rückschluss auf das persönliche Merkmal, ausgehend von dem anonymen Merkmal.

In einer alternativen Ausführungsform der Erfindung erzeugen die Anonymisierungsmittel den zufälligen Parameter einmalig und kombinieren jedes empfangene persönliche Merkmal mit dem gleichen zufälligen Parameter und wandeln das kombinierte Ergebnis mittels einer kryptologischen Hashfunktion in den anonymen Identifikator um. Derartige Anonymisierungsmittel sind weniger aufwändig und benötigen insbesondere keine Speicherung der Zuordnung des persönlichen Merkmals zu dem anonymisierten Merkmal in der Auswerteeinheit, da der gleiche zufällige Parameter wiederverwendet wird. Der Rückschluss von dem anonymen Merkmal auf das persönliche Merkmal kann durch die Verwendung eines für praktische Zwecke ausreichend langen zufälligen Parameters, d.h. von einer Länge, die einen praktisch oder wirtschaftlich nicht vertretbaren Rechenaufwand zur Entschlüsselung erfordert, insbesondere von doppelter Länge der Zeichen des Merkmals, und eines für praktische Zwecke ausreichend sicheren kryptologischen Hashalgorithmus, insbesondere einen MD4-, MD5-, SHA- und SHA-3-Hashalgorithmus, verhindert werden.

In einer weiteren vorteilhaften Ausführungsform der Erfindung weist die Datenquelle Anonymisierungsmittel auf, wobei die Anonymisierungsmittel der Datenquelle einmalig einen zufälligen Parameter der Datenquelle erzeugen und jedes erfasste persönliche Merkmal mit dem gleichen zufälligen Parameter der Datenquelle kombinieren und das kombinierte Ergebnis mittels einer kryptographischen Hashfunktion in einen anonymisierten Identifikator umwandeln. Dies ermöglicht eine doppelte Anonymisierung, zunächst in der Datenquelle und danach in der Anonymisierungseinheit. Dadurch wird verhindert, dass der Besitzer der Anonymisierungseinheit auf die persönlichen Merkmale Zugriff hat. Somit kann er nicht feststellen, ob eine bestimmte Person überhaupt von einer Datenquelle erfasst wurde. Der Rückschluss von dem anonymen Merkmal auf das persönliche Merkmal kann durch die Verwendung eines für praktische Zwecke ausreichend langen zufälligen Parameters, d.h. von einer Länge, die einen praktisch oder wirtschaftlich nicht vertretbaren Rechenaufwand zur Entschlüsselung erfordert, insbesondere von doppelter Länge der Zeichen des Merkmals, in der Datenquelle, und eines für praktische Zwecke ausreichend sicheren kryptologischen Hashalgorithmus, insbesondere einen MD4-, MD5-, SHA- und SHA-3-Hashalgorithmus, verhindert werden. Durch die zweite Anonymisierung, insbesondere durch die Verwendung der One-Time-Pad Verschlüsselung in der Anonymisierungseinheit, kann die Sicherheit der Anonymisierung weiter erhöht werden. Gleichzeitig ist eine statistische Auswertung der Ereignisdaten in der Auswerteeinheit anhand des doppelt anonymisierten, aber immer noch eindeutigen und den Ereignisdaten zugeordneten anonymen Identifikators weiterhin möglich.

Zudem wird die Aufgabe der Erfindung durch einen Sensor zur Verwendung als Datenquelle gemäß Anspruch 7, einer Anonymisierungseinheit gemäß Anspruch 11, einer Auswerteeinheit gemäß Anspruch 12 und/oder einem System zur Erfassung personenbezogener Daten gemäß Anspruch 13 gelöst.

Der erfindungsgemäße Sensor zur Verwendung als Datenquelle weist Detektionsmittel zum Erfassen der zu einem Ereignis einer Person zugehörigen Ereignisdaten und eines der Person zuordbaren persönlichen Merkmals, Verschlüsselungsmittel zur Verschlüsselung der Ereignisdaten und Kommunikationsmittel zur Übertragung des persönlichen Merkmals und der verschlüsselten Ereignisdaten und Merkmale der Datenquelle auf. Dies ermöglicht die Erfassung des persönlichen Merkmals und der Ereignisdaten und die Verschlüsselung der Ereignisdaten. Vorzugsweise werden die persönlichen Merkmale und die Ereignisdaten nach der Übertragung an die Anonymisierungseinheit in dem Sensor gelöscht. Da keine persönlichen Merkmale und keine Ereignisdaten in dem Sensor gespeichert werden, kann der Besitzer des Sensors ebenfalls keine Rückschlüsse auf die reale Person durchführen. Zudem hat der Besitzer eines Sensors keinen Zugriff auf die Daten anderer, nicht in seinem Besitz befindlichen Sensoren.

Die erfindungsgemäße Anonymisierungseinheit weist Anonymisierungsmittel zur Erzeugung eines anonymen Identifikators aus dem persönlichen Merkmal mittels eines zufällig erzeugten Parameters auf. Dies ermöglicht eine Anonymisierung des persönlichen Merkmals unabhängig von dem Sensor oder der Auswerteeinheit. Der Besitzer der Anonymisierungseinheit kann die verschlüsselten Ereignisdaten nicht entschlüsseln.

Die erfindungsgemäße Auswerteeinheit weist Entschlüsselungsmittel zur Entschlüsselung der von der Datenquelle verschlüsselten Ereignisdaten und Auswertemittel zur Auswertung der entschlüsselten Ereignisdaten anhand des anonymen Identifikators auf. Dies ermöglicht die Verwendung der Ereignisdaten zur statistischen Auswertung anhand des anonymen Identifikators in der Auswerteeinheit, ohne dass ein Rückschluss auf die Person, von der die Ereignisdaten stammen, durchgeführt werden kann.

Das erfindungsgemäße System umfasst einen erfindungsgemäßen Sensor, eine erfindungsgemäße Anonymisierungseinheit und eine erfindungsgemäße Auswerteeinheit, wobei der Sensor über Kommunikationsmittel mit der Anonymisierungseinheit und die Anonymisierungseinheit über Kommunikationsmittel mit der Auswerteeinheit verbunden sind. Ein derartiges System ermöglicht die Zurverfügungstellung von anonymisierten personenbezogenen Daten in der Auswerteeinheit, ohne dass eine Rückverfolgung der Person in der Auswerteeinheit ermöglicht wird.

Der Sensor, die Anonymisierungseinheit und die Auswerteeinheit sind insbesondere als elektronische Geräte mit einem Mikrocontroller oder Mikroprozessor ausgebildet. Alternativ können sie auch als ein Programmmodul auf einem Computer implementiert sein. Vorzugsweise sind die Verschlüsselungsmittel, die Entschlüsselungsmittel und/oder die Anonymisierungsmittel als spezielle Mikrocontroller für die gewählte Verschlüsselungsmethode oder als Verschlüsselungs-Programmodule für Mikroprozessoren ausgebildet, die in die Sensoren, in die Anonymisierungseinheit und/oder in die Auswerteeinheit integriert sind.

Weitere vorteilhafte Ausgestaltungen der Erfindung ergeben sich aus der folgenden Figurenbeschreibung und den abhängigen Unteransprüchen.

Es zeigt:

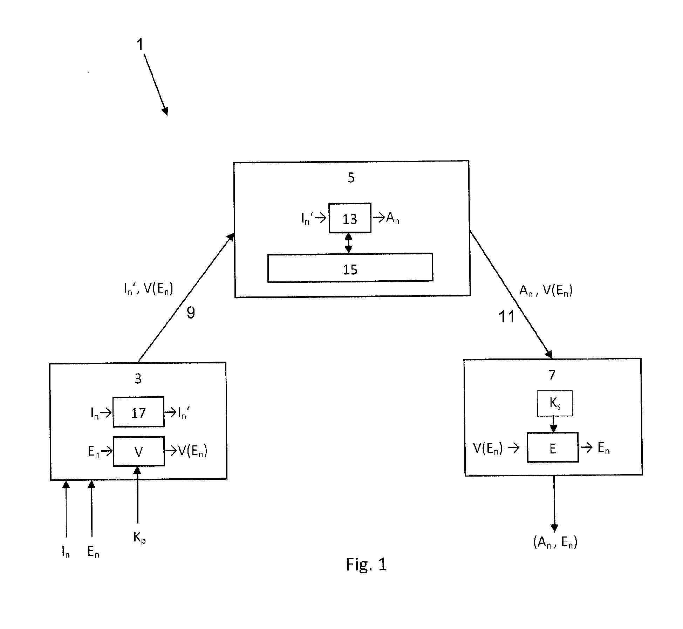

- Fig. 1: eine schematische Darstellung einer erfindungsgemäßen Ausführungsform eines Systems zur Erfassung personenbezogener Daten.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist; vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

Fig. 1 zeigt eine beispielhafte Ausführungsform eines erfindungsgemäßen Systems zur Erfassung personenbezogener Daten. Das System 1 umfasst mindestens eine, insbesondere als Sensor ausgebildete Datenquelle 3, mindestens eine Anonymisierungseinheit 5 und mindestens eine Auswerteeinheit 7. Die Datenquelle 3 ist über Kommunikationsmittel 9 mit der Anonymisierungseinheit 5 verbunden. Die Anonymisierungseinheit 5 ist über Kommunikationsmittel 11 mit der Auswerteeinheit 7 verbunden. Die Kommunikationsmittel können zum Beispiel als eine Internetverbindung ausgebildet sein. Die Art der Kommunikationsmittel 9, 11 ist jedoch prinzipiell beliebig und kann sich je nach Ausführungsform unterscheiden. Die Kommunikationsmittel können auch Verschlüsselungsmittel zur Verschlüsselung des Kommunikationsweges, wie zum Beispiel bei HTTPS, SSL oder TLS Verbindungen, aufweisen.

Die Datenquelle erfasst die zu einem Ereignis von einer Person zugehörigen Daten und trennt diese Daten in Ereignisdaten Eₙ und in mindestens ein der Person zuordbares persönliches Merkmal Iₙ. Insbesondere weist die Datenquelle 3 dazu nicht dargestellte Detektionsmittel auf, durch die die Datenquelle 3 ein einer Person zuordbares persönliches Merkmal Iₙ erfasst. Das persönliche Merkmal Iₙ ist prinzipiell eine beliebige Zeichenkette aus einer definierten Zeichengruppe und abhängig von dem Anwendungsbereich. So kann zum Beispiel die MAC-Adresse der WLAN-Schnittstelle eines Mobiltelefons einer Person verwendet werden, da diese MAC-Adresse für jedes Mobiltelefon unterschiedlich ist. Die MAC-Adresse besteht aus einer Zeichenkette von alphanumerischen Zeichen. Dazu würde die Datenquelle 3 ebenfalls mit einer WLAN-Schnittstelle ausgestattet sein, die die WLAN-Kommunikation aller in seinem Empfangsbereich sendenden Geräte mitschneidet und alle auftretenden MAC-Adressen detektiert. Zudem wäre es möglich, bestimmte Geräte, die nicht erfasst werden sollen, bereits in dem Sensor auszufiltern. Eine weitere Möglichkeit besteht darin, mittels einer Videokamera und Bilderkennungsmitteln die Kennzeichen von Fahrzeugen zu erfassen, die in einem Aufnahmebereich der Videokamera erscheinen. Die Kennzeichen bestehen insbesondere ebenfalls aus einer Zeichenkette von alphanumerischen Zeichen. Die Datenquelle 3 könnte aber auch durch die Eingabe von personenbezogenen Daten in einer IT-Anwendung beziehungsweise in einer Datenbank realisiert werden, wie zum Beispiel durch eine Eingabe eines Namens und Geburtsdatums einer Person oder eine Eingabe einer der Person zuordbaren Nummer, wie zum Beispiel Krankenversicherungsnummern, Personalausweisnummern oder Kreditkartennummern.

Zudem erfasst die Datenquelle 3 bestimmte Ereignisparameter, die zum Beispiel mit dem Anfang der Detektion des persönlichen Merkmals Iₙ oder auch mit dem Ende der Detektion des persönlichen Merkmals Iₙ verknüpft werden können. Diese Ereignisparameter können zum Beispiel der geographische Ort der Detektion oder die Zeit der Detektion sein. Ein weiteres Beispiel wäre ein Krankheitsereignis in einem Krankenhaus oder bei einem Arzt. Die Art der Ereignisse und die Ereignisparameter sind prinzipiell beliebig und abhängig von dem Anwendungsbereich. Die Art des Ereignisses und die Ereignisparameter werden von der Datenquelle 3 zu den Ereignisdaten Eₙ zusammengefasst.

Die Datenquelle 3 weist Verschlüsselungsmittel V zur Verschlüsselung der Ereignisdaten Eₙ auf. Die Verschlüsselungsmittel V der Datenquelle 3 sind insbesondere als asymmetrische Verschlüsselungsmittel V ausgebildet, wobei die Ereignisdaten Eₙ mit einem öffentlichen Schlüssel Kp der Auswerteeinheit 7 verschlüsselt werden. Die Verschlüsselungsmittel V beruhen beispielsweise auf einem Public-Key-Kryptosystem, so dass die Datenquelle 3 und die Auswerteeinheit 7 keinen gemeinsamen geheimen Schlüssel für die Ver- und Entschlüsselung benötigen. Dies hat insbesondere den Vorteil, dass die Datenquellen 3 lediglich die öffentlichen Schlüssel der Auswerteeinheit 7, jedoch keinen geheimen Schlüssel aufweisen müssen, und somit der technische Aufwand bei den Datenquellen 3 klein gehalten werden kann. Mögliche Beispiele für Public-Key-Kryptosysteme sind das RSA-, OpenPGP-, S/MIME-, SSL/TLS- oder HTTPS-Verfahren.

In der dargestellten vorteilhaften Ausführungsform weist die Datenquelle 3 zudem Anonymisierungsmittel 17 auf, wobei die Anonymisierungsmittel 17 der Datenquelle 3 einmalig einen zufälligen, zu der Gruppe der Zeichen des persönlichen Merkmals passenden Parameter der Datenquelle 3 erzeugen und jedes erfasste persönliche Merkmal Iₙ mit dem gleichen zufälligen Parameter der Datenquelle 3 kombinieren und das kombinierte Ergebnis mittels einer kryptographischen Hashfunktion, beispielsweise eine MD4-, MD5-, SHA- und SHA-3-Hashfunktion, in einen anonymisierten Identifikator (Iₙ') umwandeln. Dabei ist die Sicherheit der kryptologischen Hashfunktion abhängig von der Länge des zufälligen Parameters. Eine Zeichenlänge von doppelter Länge der Zeichen des persönlichen Merkmals Iₙ wird als für die praktische Anwendung ausreichend angesehen.

Die Datenquelle 3 kombiniert das persönliche Merkmals Iₙ oder das anonymisierte Merkmal Iₙ' mit den zugeordneten verschlüsselten Ereignisdaten V(Eₙ) zu einem persönlichen Datenpaar Iₙ, V(Eₙ) beziehungsweise Iₙ', V(Eₙ) und übermittelt das persönliche Datenpaar Iₙ, V(Eₙ) beziehungsweise Iₙ', V(Eₙ) von der Datenquelle 3 an die Anonymisierungseinheit 5 mittels der Kommunikationsmittel 9.

Die Anonymisierungseinheit 5 wandelt das empfangene persönliche Merkmal Iₙ beziehungsweise Iₙ' in einen anonymen Identifikator An unter Verwendung eines zufällig erzeugten Parameters der Anonymisierungseinheit 5 durch Anonymisierungsmittel 13 der Anonymisierungseinheit 5 um. Zudem kombiniert die Anonymisierungseinheit 5 den anonymen Identifikator An mit den empfangenen verschlüsselten Ereignisdaten V(Eₙ) zu einem anonymen Datenpaar An, V(Eₙ) und übermittelt das anonyme Datenpaar An, V(Eₙ) an die Auswerteeinheit 7 mittels der Kommunikationsmittel 11.

In einer ersten bevorzugten und dargestellten Ausführungsform der Erfindung vergleichen die Anonymisierungsmittel 13 das empfangene persönliche Merkmal Iₙ beziehungsweise Merkmal Iₙ' mit vorher bereits in Speichermitteln 15 der Anonymisierungseinheit 5 gespeicherten persönlichen Merkmalen Iₙ, Iₙ'. Die Speichermittel dienen vorzugsweise zur Speicherung einer Tabelle aus erzeugten anonymen Identifikatoren An und den zugeordneten persönlichen Merkmalen Iₙ.

Falls das empfangene persönliche Merkmal Iₙ, Iₙ' keinem der in den Speichermitteln 15 gespeicherten persönlichen Merkmalen Iₙ, Iₙ' entspricht, wandeln die Anonymisierungsmittel 13 das persönliche Merkmal Iₙ, Iₙ' in einen anonymen Identifikator An, basierend auf einer One-Time-Pad Verschlüsselung des empfangenen persönlichen Merkmals Iₙ, mittels des zufällig erzeugten Parameters als einmalig verwendeter Schlüssel um. Dabei wird der zufällig generierte Parameter vorzugsweise direkt nach der Erzeugung des anonymen Identifikators An verworfen, so dass für jede neue Umwandlung ein neuer zufällig generierter Parameter verwendet wird. Zudem speichern die Anonymisierungsmittel 13 den neuen anonymen Identifikator An zusammen mit dem zugehörigen persönlichen Merkmal Iₙ in den Speichermitteln 15 der Anonymisierungseinheit 5.

Falls das persönliche Merkmal Iₙ, Iₙ' bereits in den Speichermitteln 15 vorhanden ist, lesen die Anonymisierungsmittel 13 den dem empfangenen persönlichen Merkmal Iₙ, Iₙ' zugehörigen anonymen Identifikator Aₙ aus den Speichermitteln 15 aus.

In einer alternativen Ausführungsform der Erfindung erzeugen die Anonymisierungsmittel 13 den zufälligen Parameter einmalig während eines definierten Betriebszyklus und kombinieren jedes empfangene persönliche Merkmal Iₙ, Iₙ' in dem Betriebszyklus mit dem gleichen zufälligen Parameter und wandeln das kombinierte Ergebnis mittels einer kryptologischen Hashfunktion, beispielsweise einer MD4-, MD5-, SHA- und SHA-3-Hashfunktion, in den anonymen Identifikator Aₙ um. Dabei ist die Sicherheit der kryptologischen Hashfunktion abhängig von der Länge des zufälligen Parameters. Eine Zeichenlänge von doppelter Länge der Zeichen des persönlichen Merkmals Iₙ wird als für die praktische Anwendung ausreichend angesehen.

Die Auswerteeinheit 7 entschlüsselt die empfangenen verschlüsselten Ereignisdaten V(Eₙ) mittels Entschlüsselungsmitteln E und ordnet die entschlüsselten Ereignisdaten Eₙ dem anonymen Identifikator An zur Verwendung der Daten in der Auswerteeinheit 7 zu. Die Entschlüsselungsmittel E der Auswerteeinheit 7 sind insbesondere als asymmetrische Entschlüsselungsmittel E ausgebildet, wobei die empfangenen verschlüsselten Ereignisdaten V(Eₙ) mit einem privaten Schlüssel Kₛ der Auswerteeinheit 7 entschlüsselt werden. Die Entschlüsselungsmittel E sind mit den Verschlüsselungsmitteln V der Datenquelle 3 kompatibel.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1, 7, 11, 12 und 13 definierte Merkmalskombination beschränkt, sondern kann auch durch jede beliebige andere Kombination von bestimmten Merkmalen aller insgesamt offenbarten Einzelmerkmale definiert sind. Dies bedeutet, dass grundsätzlich praktisch jedes Einzelmerkmal des Anspruchs 1, 7, 11, 12 und 13 weggelassen bzw. durch mindestens ein an anderer Stelle der Anmeldung offenbartes Einzelmerkmal ersetzt werden kann.

## Patentansprüche

1. Verfahren zur Erfassung personenbezogener Daten, aufweisend folgende Verfahrensschritte,
- Erfassen der zu einem Ereignis von einer Person zugehörigen Daten in einer Datenquelle (3) und Trennung der Daten in Ereignisdaten (Eₙ) und in mindestens ein der Person zuordbares persönliches Merkmal (Iₙ),
- Verschlüsselung der Ereignisdaten (Eₙ) in der Datenquelle (3) mittels Verschlüsselungsmitteln (V),
- Kombination des persönlichen Merkmals (Iₙ, Iₙ') mit den zugeordneten verschlüsselten Ereignisdaten (V(Eₙ)) zu einem persönlichen Datenpaar (Iₙ, V(Eₙ); Iₙ', V(E)) und Übermittlung des persönlichen Datenpaares (Iₙ, V(Eₙ); Iₙ', V(E)) von der Datenquelle (3) an eine Anonymisierungseinheit (5),
- Umwandlung des empfangenen persönlichen Merkmals (Iₙ, Iₙ') in einen anonymen Identifikator (An) unter Verwendung eines zufällig erzeugten Parameters durch Anonymisierungsmittel (13) der Anonymisierungseinheit (5),
- Kombination des anonymen Identifikators (Aₙ) mit den empfangenen verschlüsselten Ereignisdaten (V(Eₙ)) zu einem anonymen Datenpaar (An, V(Eₙ)) in der Anonymisierungseinheit (5) und Übermittlung des anonymen Datenpaares (An, V(Eₙ)) von der Anonymisierungseinheit (5) an eine Auswerteeinheit (7),
- Entschlüsselung der empfangenen verschlüsselten Ereignisdaten (V(Eₙ)) in der Auswerteeinheit (7) mittels Entschlüsselungsmitteln (E) und Zuordnung der entschlüsselten Ereignisdaten (Eₙ) zu dem anonymen Identifikator (Aₙ) zur Verwendung der Daten in der Auswerteeinheit (7).

2. Verfahren nach Anspruch 1,
**dadurch gekennzeichnet, dass**
- die Anonymisierungsmittel (13) das empfangene persönliche Merkmal (Iₙ, Iₙ') mit vorher bereits in Speichermitteln (15) der Anonymisierungseinheit (5) gespeicherten persönlichen Merkmalen (Iₙ, Iₙ') vergleichen,
- und falls das empfangene persönliche Merkmal (Iₙ, Iₙ') keinem der in den Speichermitteln (15) gespeicherten persönlichen Merkmalen (Iₙ, Iₙ') entspricht, das persönliche Merkmal (Iₙ, Iₙ') in einen anonymen Identifikator (An), basierend auf einer One-Time-Pad Verschlüsselung des empfangenen persönlichen Merkmals (Iₙ, Iₙ'), mittels des zufällig erzeugten Parameters als einmalig verwendeter Schlüssel umwandeln, und den neuen anonymen Identifikator (Aₙ) zusammen mit dem zugehörigen persönlichen Merkmal (Iₙ, Iₙ') in den Speichermitteln (15) der Anonymisierungseinheit (5) speichern,
- oder falls das persönliche Merkmal (Iₙ, Iₙ') bereits in den Speichermitteln (15) vorhanden ist, den dem empfangenen persönlichen Merkmal (Iₙ, Iₙ') zugehörigen anonymen Identifikator (Aₙ) aus den Speichermitteln (15) auslesen.

3. Verfahren nach Anspruch 1,
**dadurch gekennzeichnet, dass**
die Anonymisierungsmittel (13) den zufälligen Parameter einmalig erzeugen und jedes empfangene persönliche Merkmal (Iₙ, Iₙ') mit dem gleichen zufälligen Parameter kombinieren und das kombinierte Ergebnis mittels einer kryptologischen Hashfunktion in den anonymen Identifikator (An) umwandeln.

4. Verfahren nach einem der Ansprüche 1 bis 3,
**dadurch gekennzeichnet, dass**
die Verschlüsselungsmittel (V) der Datenquelle (3) als asymmetrische Verschlüsselungsmittel (V) ausgebildet sind, wobei die Ereignisdaten (Eₙ) mit einem öffentlichen Schlüssel (Kp) der Auswerteeinheit (7) verschlüsselt werden.

5. Verfahren nach einem der Ansprüche 1 bis 4,
**dadurch gekennzeichnet, dass**
die Entschlüsselungsmittel (E) der Auswerteeinheit (7) als asymmetrische Entschlüsselungsmittel (E) ausgebildet sind, wobei die empfangenen verschlüsselten Ereignisdaten (V(Eₙ)) mit einem privaten Schlüssel (Kₛ) der Auswerteeinheit (7) entschlüsselt werden.

6. Verfahren nach einem der Ansprüche 1 bis 5,
**dadurch gekennzeichnet, dass**
die Datenquelle (3) Anonymisierungsmittel (17) aufweist, wobei die Anonymisierungsmittel (17) der Datenquelle (3) einmalig einen zufälligen Parameter der Datenquelle (3) erzeugen und jedes erfasste persönliche Merkmal (Iₙ) mit dem gleichen zufälligen Parameter der Datenquelle (3) kombinieren und das kombinierte Ergebnis mittels einer kryptographischen Hashfunktion in einen anonymisierten Identifikator (Iₙ') umwandeln.

7. Sensor zur Verwendung als Datenquelle (3) bei einem Verfahren gemäß einem der Ansprüche 1 bis 6, aufweisend Detektionsmittel zum Erfassen der zu einem Ereignis einer Person zugehörigen Ereignisdaten (Eₙ) und eines der Person zuordbaren persönlichen Merkmals (Iₙ), Verschlüsselungsmittel (V) zur Verschlüsselung der Ereignisdaten (Eₙ) und Kommunikationsmittel zur Übertragung des persönlichen Merkmals (Iₙ) und der verschlüsselten Ereignisdaten (V(Eₙ)) und Merkmale der Datenquelle (3) gemäß einem der Ansprüche 1 bis 6.

8. Sensor nach Anspruch 7,
**dadurch gekennzeichnet, dass**
die Detektionsmittel eine WLAN-Schnittstelle umfassen, wobei das der Person zuordbare persönliche Merkmal (Iₙ) als über die WLAN-Schnittstelle empfangene Daten eines von der Person mitgeführten elektronischen Gerätes erfasst wird.

9. Sensor nach Anspruch 7,
**dadurch gekennzeichnet, dass**
die Detektionsmittel eine Video-Kamera und Bilderkennungsmittel umfassen, wobei das der Person zuordbare persönliche Merkmal (Iₙ) als ein über die Video-Kamera aufgenommenes und mittels der Bilderkennungsmittel erkanntes Kfz-Kennzeichen erfasst wird.

10. Sensor nach Anspruch 7,
**dadurch gekennzeichnet, dass**
die Detektionsmittel ein Daten-Modul eines IT-Systems umfassen, wobei das der Person zuordbare persönliche Merkmal (Iₙ) als eine gespeicherte Identifikationsnummer des IT-Systems erfasst wird.

11. Anonymisierungseinheit (5) zur Verwendung bei einem Verfahren gemäß einem der Ansprüche 1 bis 6, aufweisend Anonymisierungsmittel (13) zur Erzeugung eines anonymen Identifikators (An) aus dem persönlichen Merkmal (Iₙ) mittels eines zufällig erzeugten Parameters und Merkmale der Auswerteeinheit (5) gemäß einem der Ansprüche 1 bis 6.

12. Auswerteeinheit (7) zur Verwendung bei einem Verfahren gemäß einem der Ansprüche 1 bis 6, aufweisend Entschlüsselungsmittel (E) zur Entschlüsselung der von der Datenquelle (3) verschlüsselten Ereignisdaten (V(Eₙ)) und Auswertemittel zur Auswertung der entschlüsselten Ereignisdaten (Eₙ) anhand des anonymen Identifikators (An) und Merkmale der Auswerteeinheit (7) gemäß einem der Ansprüche 1 bis 6.

13. System (1) zur Erfassung personenbezogener Daten gemäß dem Verfahren nach einem der Ansprüche 1 bis 6, aufweisend einen Sensor gemäß einem der Ansprüche 7 bis 10, eine Anonymisierungseinheit (5) gemäß dem Anspruch 11 und eine Auswerteeinheit (7) gemäß Anspruch 12, wobei der Sensor über Kommunikationsmittel (9) mit der Anonymisierungseinheit (5) verbunden ist und die Anonymisierungseinheit (5) über Kommunikationsmittel (11) mit der Auswerteeinheit (7) verbunden ist.
